# EUROPEAN PATENT APPLICATION

(11) **EP 4 752 117 A1**
(43) Date of publication of application: **03.06.2026**
(21) Application number: 25186201.7
(22) Date of filing: 30.06.2025
(51) Int. Cl.: C04B 7/153, C04B 12/00, C04B 28/00, C04B 28/08

(54) **CONCRETE AND METHOD FOR PREPARING THE SAME**

(30) Priority: 29.11.2024 TW 113146227
(71) Applicant: Industrial Technology Research Institute, 310401 Hsinchu (TW)
(72) Inventor: HSU, Chien-Hua, New Taipei City (TW); CHANG, Ming-Hui, New Taipei City (TW); LIN, Jun-Hong, New Taipei City (TW)
(74) Representative: Bandpay & Greuter

(57) **Abstract**

A concrete and a method for preparing the same are provided. The concrete includes 11wt% to 20wt% of sodium, 3wt% to 6wt% of magnesium, 7wt% to 11wt% of aluminum, 15wt% to 22wt% of silicon, 0.4wt% to 0.7wt% of potassium, and 49wt% to 53wt% of calcium, based on the total weight of sodium, magnesium, aluminum, silicon, potassium, and calcium in the concrete. Additionally, the concrete includes a calcium aluminosilicate compound.

## Description

### TECHNICAL FIELD

The disclosure relates to a concrete and a method for preparing concrete.

### BACKGROUND

Concrete is a building material that is widely used in various construction projects, such as public infrastructure, buildings, and home maintenance. The primary components of concrete are cement and water. Conventional concrete has a very high carbon footprint, wherein 90% of its carbon emissions come from cement production. However, the production of cement requires the use of fossil fuels and a rotary kiln calcination process. According to statistics, cement production accounts for about 8% of global carbon dioxide emissions. In response to increasingly stringent emission standards and carbon reduction pressures, it is necessary to develop low-carbon emission cement technologies. In addition, the process of manufacturing concrete requires a large amount of natural sand and stone, which are finite natural resources. Therefore, it is an urgent issue in the industry to replace or reduce the use of natural sand and stone.

On the other hand, the world is facing the issue of slag disposal in the steel industry, such as reducing slag and oxidizing slag aggregates. Currently, most of the slag treatment is to directly transport the steelmaking slag to the planned disposal sites for dumping and burial, causing severe environmental pollution. Additionally, industrial waste alkaline solutions generated from dust collection pretreatment require costly treatment methods to prevent pollution.

Therefore, a novel concrete and a method for preparing the same is called for to solve the aforementioned problems, in order to reduce carbon emissions during concrete production and effectively recycle waste.

### SUMMARY

According to embodiments of the disclosure, the disclosure provides a concrete. The concrete can include 11wt% to 20wt% of sodium (Na), 3wt% to 6wt% of magnesium (Mg), 7wt% to 11wt% of aluminum (Al), 15wt% to 22wt% of silicon (Si), 0.4wt% to 0.7wt% of potassium (K), and 49wt% to 53wt% of calcium (Ca), based on the total weight of sodium, magnesium, aluminum, silicon, potassium, and calcium, wherein the concrete comprises a calcium aluminosilicate compound.

According to embodiments of the disclosure, the disclosure provides a method for preparing the concrete of the disclosure. A method for preparing concrete may include following steps. A concrete mixture is provided, wherein the concrete mixture may include a cementitious material and a waste alkaline solution. The concrete mixture is subjected to a molding process, obtaining a green body. The green body is subjected to a curing process at room temperature, obtaining the concrete of the disclosure. The cementitious material includes 35 to 70 parts by weight of blast furnace slag and 30 to 65 parts by weight of reducing slag. The waste alkaline solution can include a sodium ion, and the concentration of sodium ion is 100,000 ppm to 150,000 ppm. The weight ratio of the waste alkaline solution to the cementitious material may be 3: 10 to 5: 10.

A detailed description is given in the following embodiments.

### BRIEF DESCRIPTION OF THE DRAWINGS

The present disclosure can be more fully understood by reading the subsequent detailed description and examples with references made to the accompanying drawings, wherein:
FIG. 1 is a flow chart illustrating a method for preparing the concrete 10 according to the embodiments of the disclosure.
FIG. 2 is a scanning electronic microscope (SEM) photograph of Concrete column (1) in Example 1.
FIG. 3 is a scanning electronic microscope (SEM) photograph of Concrete column (4) in Comparative Example 1.

### DETAILED DESCRIPTION

The concrete and method for preparing concrete of the disclosure are described in detail in the following description. In the following detailed description, for purposes of explanation, numerous specific details and embodiments are set forth in order to provide a thorough understanding of the present disclosure. The specific elements and configurations described in the following detailed description are set forth in order to clearly describe the present disclosure. It will be apparent, however, that the exemplary embodiments set forth herein are used merely for the purpose of illustration, and the inventive concept may be embodied in various forms without being limited to those exemplary embodiments. In addition, the drawings of different embodiments may use like and/or corresponding numerals to denote like and/or corresponding elements in order to clearly describe the present disclosure. However, the use of like and/or corresponding numerals in the drawings of different embodiments does not suggest any correlation between different embodiments. As used herein, the term "about" in quantitative terms refers to plus or minus an amount that is general and reasonable to persons skilled in the art.

Further, the use of ordinal terms such as "first", "second", "third", etc., in the disclosure to modify an element does not by itself connote any priority, precedence, order of one claim element over another or the temporal order in which it is formed, but are used merely as labels to distinguish one claim element having a certain name from another element having the same name (but for use of the ordinal term) to distinguish the claim elements.

Unless otherwise defined, all terms (including technical and scientific terms) used herein have the same meaning as commonly understood by one of ordinary skill in the art to which this disclosure is a part. Terms, such as those defined in commonly used dictionaries, should be interpreted as having a meaning that is consistent with their meaning in the context of the relevant art and will not be interpreted in an idealized or overly formal sense, unless expressly so defined herein.

Embodiments of the disclosure provide a concrete and a method for preparing the same, such as a concrete prepared using industrial by-products (or waste) and a method for preparing the same. In the disclosure, the resource reutilization of industrial by-products (or waste) is realized to obtain environmentally friendly concrete that can solidify at room temperature, with high compressive strength and low toxicity. The method for preparing the concrete of the disclosure provides a concrete mixture, wherein the concrete mixture is derived from a specific cementitious material obtained from industrial by-products (or waste) mixed with a waste alkaline solution. The cementitious material includes a specific content of blast furnace slag and reducing slag, wherein the waste alkaline solution includes a sodium ion with a concentration from 100,000 ppm to 150,000 ppm. Since the waste alkaline solution serves as an alkali activator (replacing expensive chemical alkalis) and is mixed with the cementitious material in a specific ratio, the metal oxides (such as silicon oxide (SiO₂), aluminum oxide (Al₂O₃), calcium oxide (CaO), magnesium oxide (MgO)) in the cementitious material undergo recombination and polymerization via alkali activation at room temperature. Accordingly, the obtained inorganic polymer contains a highly dense gelatinous calcium aluminosilicate compound, which facilitates to immobilize and encapsulate heavy metals, avoiding the release thereof. As a result, the concrete mixture of the disclosure exhibits an appropriate solidification rate at room temperature, and the resulting concrete has low toxicity, resistance to expansion, and high compressive strength. Accordingly, the concrete of the disclosure and the method for preparing the same offer the following advantages: good workability properties, lower raw material costs, avoidance of natural sand and stone usage, resolution of waste disposal issues, low carbon emissions, and achievement of resource reutilization. The concrete mixture of the disclosure can replace conventional concrete (such as concrete mixtures containing Type I Portland cement, natural sand and stone, and chemical alkalis).

According to the embodiments of the disclosure, the concrete of the disclosure may include about 11wt% to 20wt% (such as 12wt%, 13wt%, 14wt%, 15wt%, 16wt%, 17wt%, 18wt%, or 19wt%) of sodium (Na), 3wt% to 6wt% (such as 3.5wt%, 4wt%, 4.5wt%, 5wt%, or 5.5wt%) of magnesium (Mg), 7wt% to 11wt% (such as 7.5wt%, 8wt%, 8.5wt%, 9wt%, 9.5wt%, 10wt%, or 10.5wt%) of aluminum (Al), 15wt% to 22wt% (such as 16wt%, 17wt%, 18wt%, 19wt%, 20wt%, or 21wt%) of silicon (Si), 0.4wt% to 0.7wt% (such as 0.45wt%, 0.5wt%, 0.55wt%, 0.6wt%, or 0.65wt%) of potassium (K), and 49wt% to 53wt% (such as 49.5wt%, 50wt%, 50.5wt%, 51wt%, 51.5wt%, 52wt%, or 52.5wt%) of calcium (Ca). The weight percentage of the aforementioned elements is based on the total weight of sodium, magnesium, aluminum, silicon, potassium and calcium elements in the concrete. According to embodiments of the disclosure, the sodium, magnesium, aluminum, silicon, potassium, and calcium content in the concrete of the disclosure may be determined using an X-ray fluorescence spectrometer (XRF).

According to the embodiments of the disclosure, the concrete includes a calcium aluminosilicate compound. According to the embodiments of the disclosure, the calcium aluminosilicate compound may have a structure represented by Formula (I)

CaₐAl_{b}(SiO₄)_{c} Formula (I)

, wherein 0 < a ≤ 3, 0 < b ≤ 2, and 0 < c ≤ 3. For example, the calcium aluminosilicate compound has a structure of Ca₃Al₂(SiO₄)₃.

According to the embodiments of the disclosure, the concrete of the disclosure may substantially consist of sodium, magnesium, aluminum, silicon, potassium, calcium, oxygen and sulfur. Herein, "the concrete may substantially consist of sodium, magnesium, aluminum, silicon, potassium, calcium, oxygen and sulfur" means that the content of elements other than sodium, magnesium, aluminum, silicon, potassium, calcium, oxygen and sulfur is less than 5wt% (such as less than 4wt%, less than 3wt%, less than 2wt%, or less than 1wt%) based on the total weight of the concrete.

According to the embodiments of the disclosure, the concrete of the disclosure further includes an element X, wherein the element X refers to an element other than sodium, magnesium, aluminum, silicon, potassium, calcium, oxygen, and sulfur. The weight ratio of the element X to the total weight of sodium, magnesium, aluminum, silicon, potassium and calcium in the concrete may be about 0.1: 99.9 to 10: 90, such as about 0.2: 99.8, 0.5: 99.5, 1: 99, 2: 98, 3: 97, 4: 96, 5: 95, 6: 94, 7: 93, 8: 92, or 9: 91, but this disclosure is not limited thereto. The elemental content of the concrete of the disclosure may be determined using an X-ray fluorescence spectrometer (XRF).

According to the embodiments of the disclosure, in the concrete of the disclosure, the weight ratio of sodium to silicon may be about 1:2 to 4:3 (such as about 2:3, 3:4, 4:5, 9:10, 1:1, 10:9, 7:6, or 5:4). According to the embodiments of the disclosure, when the weight ratio of sodium to silicon in the concrete of the disclosure falls within the aforementioned range, the concrete exhibits a denser structure, thereby enhancing the physical properties (such as compressive strength) of the concrete.

According to the embodiments of the disclosure, the sodium, magnesium, aluminum, silicon, potassium, and/or calcium contained in the concrete of the disclosure may exist in the form of oxides (such as sodium oxide, magnesium oxide, aluminum oxide, silicon oxide, potassium oxide, calcium oxide, calcium silicate, magnesium silicate, aluminum silicate, calcium magnesium silicate, calcium aluminum silicate (or calcium aluminosilicate compound), and/or calcium aluminate). Therefore, the concrete of the disclosure is a composite oxide.

According to the embodiments of the disclosure, the calcium aluminosilicate compound has a characteristic peak at 2θ (diffraction angle) from 43.4° to 44.5° in an X-ray diffraction spectrum of the concrete of the disclosure.

According to the embodiments of the disclosure, the X-ray diffraction spectrum of the concrete may have a characteristic peak at 2θ from 43.4° to 44.5° with a first integral intensity (S1) and the X-ray diffraction spectrum of the concrete may have a characteristic peak at 2θ from 31.9° to 32.2° with a second integral intensity (S2), wherein the ratio of the first integral intensity to the second integral intensity (S1/S2) is 0.03 to 0.15, such as 0.04, 0.05, 0.06, 0.07, 0.08, 0.09, 0.1, 0.11, 0.12, 0.13, or 0.14, but this disclosure is not limited thereto. When the ratio (S1/S2) is too low or equal to zero, it indicates that the cementitious material used to form the concrete does not tend to undergo gelatinization, resulting in a lower content of calcium aluminosilicate compound in the concrete or no formation of calcium aluminosilicate compound at all. Consequently, the obtained concrete has a loose structure (lower density and larger average pore size). As a result, the compressive strength of the concrete decreases, and the loose structure allows the heavy metal elements contained in the concrete column to diffuse out.

According to the embodiments of the disclosure, the density of the concrete of the disclosure can be about 2.2 g/cm³ to 2.4 g/cm³. According to the embodiments of the disclosure, after 28 days of curing at room temperature, the compressive strength of the concrete of the disclosure can be greater than or equal to 440 kgf/cm² (such as about 440 kgf/cm² to 700 kgf/cm²). According to the embodiments of the disclosure, the evaluation of compressive strength is performed using a universal testing machine (Zwick Roell Z020, Zwick/Roell GmbH) based on the method according to ASTM C109.

According to the embodiments of the disclosure, the concrete of the disclosure is characterized by a Fourier transform infrared (FTIR) spectrum that includes a characteristic peak in the range of 1,000 cm⁻¹ to 1,500 cm⁻¹, indicating that the reaction between blast furnace slag and reducing slag leads to changes or reorganization in the gel structure, forming a Si-O-T (T being SiO₄ or AlO₄) structure.

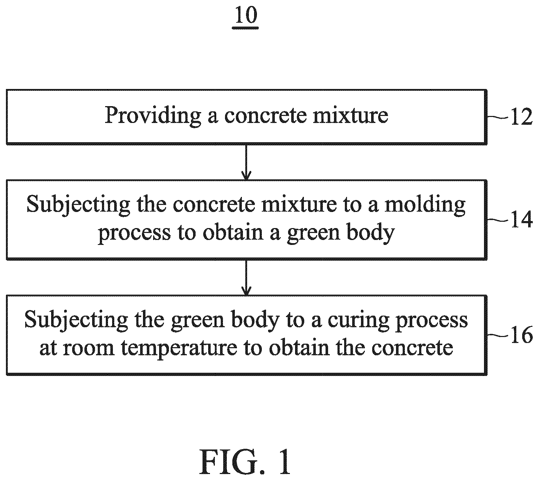

According to the embodiments of the disclosure, the disclosure also provides a method for preparing the concrete, in order to prepare the concrete of the disclosure. As shown in FIG. 1, according to the embodiments of the disclosure, a method for preparing concrete 10 includes providing a concrete mixture (step 12), subjecting the concrete mixture to a molding process to obtain a green body (step 14), and subjecting the green body to a curing process at room temperature to obtain the concrete (step 16).

According to embodiments of the disclosure, the concrete mixture can include a cementitious material and a waste alkaline solution. According to embodiments of the disclosure, the cementitious material may be entirely derived from steel plant waste. For example, the cementitious material may include 35 to 70 parts by weight (such as 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, or 69 parts by weight ) of blast furnace slag, and 30 to 65 parts by weight (such as 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, or 64 parts by weight ) of reducing slag.

According to the embodiments of the disclosure, due to the relatively low reactivity of reducing slag, when the amount of reducing slag is too high (i.e., the amount of blast furnace slag is too low), the resulting concrete structure becomes less dense (i.e., increased porosity), leading to insufficient compressive strength. In addition, when the amount of reducing slag is too low (i.e., the amount of blast furnace slag is too high), the concrete mixture tends to have a shorter curing time, adversely affecting the formation of calcium aluminosilicate compounds within the concrete.

According to the embodiments of the disclosure, the cementitious material may consist of the blast furnace slag and the reducing slag. According to the embodiments of the disclosure, the blast furnace slag and/or reducing slag may be derived from converter slag, oxidizing slag, coal fly ash, coal bottom ash, aluminum dross, waste catalysts, waste construction materials, waste gypsum, sludge, bottom ash, sulfate slag, calcium sulfate, or a combination thereof. According to the embodiments of the disclosure, the blast furnace slag can include 0.1wt% to 0.5wt% (such as 0.2wt%, 0.3wt%, or 0.4wt%) of sodium (Na), 5wt% to 8wt% (such as 5.5wt%, 6wt%, 6.5wt%, 7wt%, or 7.5wt%) of magnesium (Mg), 13wt% to 16wt% (such as 13.5wt%, 14wt%, 14.5wt%, 15wt%, or 15.5wt%) of aluminum (Al), 24wt% to 27wt% (such as 24.5wt%, 25wt%, 25.5wt%, 26wt%, or 26.5wt%) of silicon (Si), 0.2wt% to 0.7wt% of potassium (K), and 50wt% to 55wt% (such as 51wt%, 52wt%, 53wt%, or 54wt%) of calcium (Ca), based on the total weight of sodium, magnesium, aluminum, silicon, potassium and calcium elements in the blast furnace slag.

According to the embodiments of the disclosure, the reducing slag can include 0.2wt% to 0.6wt% (such as 0.3wt%, 0.4wt%, or 0.5wt%) of sodium (Na), 3wt% to 6wt% (such as 3.5wt%, 4wt%, 4.5wt%, 5wt%, or 5.5wt%) of magnesium (Mg), 1wt% to 3wt% (such as 1.5wt%, 2wt%, or 2.5wt%) of aluminum (Al), 16wt% to 20wt% (such as 17wt%, 18wt%, or 19wt%) of silicon (Si), 0.05wt% to 0.3wt% (such as 0.1wt%, 0.15wt%, 0.2wt%, or 0.25wt%) of potassium (K), and 70wt% to 80wt% (such as 71wt%, 72wt%, 73wt%, 74wt%, 75wt%, 76wt%, 77wt%, 78wt%, or 79wt%) of calcium (Ca), based on the total weight of sodium, magnesium, aluminum, silicon, potassium and calcium in the reducing slag. The elemental content of the blast furnace slag and the reducing slag may be determined using an X-ray fluorescence spectrometer (XRF).

According to the embodiments of the disclosure, the particle size distribution D90 of the blast furnace slag may be 40 µm to 90 µm, such as 45 µm, 50 µm, 55 µm, 60 µm, 65 µm, 70 µm, 75 µm, 80 µm, or 85 µm, but this disclosure is not limited thereto. According to embodiments of the disclosure, the particle size distribution D90 of the reducing slag may be 50 µm to 100 µm, such as 55 µm, 60 µm, 65 µm, 70 µm, 75 µm, 80 µm, 85 µm, 90 µm, or 95 µm, but this disclosure is not limited thereto. Herein, the particle size distribution D90 indicates that 90% of the total powder volume has a particle diameter less than the value defined by D90. According to the embodiments of the disclosure, the particle size distribution D90 is determined according to the method specified in ISO 13322-1:2004.

According to the embodiments of the disclosure, the waste alkaline solution may be a sodium-containing aqueous solution derived from industrial waste alkali produced during dust collection pretreatment. For example, the waste alkaline solution may be a semiconductor polishing waste alkaline solution, aluminum dross recycling alkaline solution, ceramic process cleaning waste alkaline solution, or a combination thereof. According to embodiments of the disclosure, the waste alkaline solution includes a sodium ion with a concentration of about 100,000 ppm to 150,000 ppm, such as 105,000 ppm, 110,000 ppm, 115,000 ppm, 120,000 ppm, 125,000 ppm, 130,000 ppm, 135,000 ppm, 140,000 ppm, or 145,000 ppm, but this disclosure is not limited thereto. When the concentration of sodium ion in the waste alkaline solution is too low, the amount of waste alkaline solution required for the concrete mixture must be increased, leading to a decrease in the alkali equivalent concentration. This not only increases the curing time of the concrete mixture but also results in higher porosity in the final concrete, reducing the compressive strength of concrete. Conversely, when the concentration of sodium ion in the waste alkaline solution is too high, the amount of waste alkaline solution used in the concrete mixture must be reduced, leading to an increase in the alkali equivalent concentration. This causes the concrete mixture to have a shorter curing time, adversely affecting the formation of calcium aluminosilicate compounds in the concrete.

According to embodiments of the disclosure, since the waste alkaline solution is derived from industrial waste alkali, in addition to sodium ion, the waste alkaline solution may also contain other cations. The total concentration of these additional cations, excluding sodium ion, may be about 5,000 ppm to 30,000 ppm, such as 8,000 ppm, 10,000 ppm, 15,000 ppm, 20,000 ppm, or 25,000 ppm, but this disclosure is not limited thereto. These additional cations may include lead ion, cadmium ion, chromium ion, selenium ion, copper ion, barium ion, arsenic ion, mercury ion, or a combination thereof. During the curing process of the concrete mixture, gelatinous calcium aluminosilicate compounds form, increasing the density of the concrete structure. The gelation facilitates to immobilize and encapsulate heavy metal elements (such as lead, cadmium, chromium, arsenic, mercury), avoiding the release thereof. Therefore, even if the waste alkaline solution has a high concentration of heavy metal ion, the concrete of the disclosure still exhibits an extremely low heavy metal leaching concentration, effectively addressing waste disposal issues. According to embodiments of the disclosure, the ion content of the waste alkaline solution may be determined using an inductively coupled plasma optical Emission spectroscopy (ICP-OES) analyzer.

According to the embodiments of the disclosure, in the concrete mixture, the weight ratio of the waste alkaline solution to the cementitious material may be about 3:10 to 5:10, such as 3.5:10, 4:10, or 4.5:10, but this disclosure is not limited thereto. When the amount of waste alkaline solution is too low, it is difficult to uniformly mix the concrete mixture and the curing time of the concrete mixture would be shorted, adversely affecting the formation of calcium aluminosilicate compound within the concrete. When the amount of waste alkaline solution is too high, the water content in the concrete mixture becomes excessive, leading to increased porosity in the concrete, thereby reducing the compressive strength of the concrete.

According to the embodiments of the disclosure, the alkali equivalent concentration (eq/L) of the waste alkaline solution may be 2.45 eq/L to 2.65 eq/L, such as 2.50 eq/L, 2.55 eq/L, or 2.60 eq/L, but this disclosure is not limited thereto. When the alkali equivalent concentration is too low, it not only increases the curing time of the concrete mixture but also results in higher porosity in the final concrete, reducing the compressive strength of the concrete. When the alkali equivalent concentration is too high, the intense reaction shortens the curing time of the concrete mixture, adversely affecting the formation of calcium aluminosilicate compound within the concrete.

According to embodiments of the disclosure, the concrete mixture may further include oxidizing slag derived from industrial waste, such as oxidizing slag sand, three-eighths oxidizing slag stone (characterized by a maximum particle size of three-eighths inches), six-eighths oxidizing slag stone (characterized by a maximum particle size of six-eighths inches), or a combination thereof. According to embodiments of the disclosure, the oxidizing slag may consist of glass fragments, aluminum dross aggregate, fly ash aggregate, or a combination thereof. Since the oxidizing slag generally has a rough surface, the contact area between the oxidizing slag and the inorganic polymer (formed by recombination, dehydration, and polymerization of the cementitious material) is increased, thereby enhancing the bonding ability of the oxidizing slag and improving compressive strength.

According to the embodiments of the disclosure, the oxidizing slag may include 5wt% to 13wt% (such as 6wt%, 7wt%, 8wt%, 9wt%, 10wt%, 11wt%, or 12wt%) of magnesium (Mg), 3wt% to 6wt% (such as 3.5wt%, 4wt%, 4.5wt%, 5wt%, or 5.5wt%) of aluminum (Al), 18wt% to 21wt% (such as 18.5wt%, 19wt%, 19.5wt%, 20wt%, 20.5wt%) of silicon (Si), 0.2wt% to 0.5wt% (such as 0.25wt%, 0.3wt%, 0.35wt%, 0.4wt%, 0.45wt%) of potassium (K), and 64wt% to 70wt% (such as 65wt%, 66wt%, 67wt%, 68wt%, or 69wt%) of calcium (Ca), based on the total weight of magnesium, aluminum, silicon, potassium and calcium in the oxidizing slag. According to the embodiments of the disclosure, the oxidizing slag has a particle size distribution D90 of about 500µm to 3cm, such as 600µm, 700µm, 800µm, 900µm, 1mm, 2mm, 3mm, 4mm, 5mm, 6mm, 7mm, 8mm, 9mm, 1cm, 1.5cm, 2cm, or 2.5cm, but this disclosure is not limited thereto. The elemental content of the oxidizing slag may be determined using an X-ray fluorescence spectrometer (XRF). According to the embodiments of the disclosure, the weight ratio of oxidizing slag to cementitious material may be 1:100 to 4:1, such as 1:50, 1:20, 1:10, 1:5, 1:3, 1:2, 1:1, 2:1, or 3:1, but this disclosure is not limited thereto. When the additive amount of oxidizing slag is too high, the concrete structure becomes less dense (i.e., increased porosity), leading to insufficient compressive strength.

According to the embodiments of the disclosure, the concrete mixture of the disclosure may consist of the cementitious material, waste alkaline solution and oxidizing slag, wherein the cementitious material, waste alkaline solution and oxidizing slag are industrial waste. According to the embodiments of the disclosure, the blast furnace slag, reducing slag and oxidizing slag are industrial waste produced from electric arc furnaces in steel mills. According to the embodiments of the disclosure, the concrete mixture of the disclosure does not include natural sand/stone materials. In comparison with the conventional concrete, since natural sand/stone materials generally have smooth surfaces (with relatively low surface roughness), the contact area between those and the inorganic polymer (formed by recombination, dehydration, and polymerization of the cementitious material) is reduced, leading to lower compressive strength of the resulting concrete. Accordingly, the raw materials used in the concrete of the disclosure are all recycled materials, providing advantages such as low carbon emissions, low cost, and waste resource reutilization.

Below, exemplary embodiments will be described in detail with reference to the accompanying drawings so as to be easily realized by a person having ordinary knowledge in the art. The inventive concept may be embodied in various forms without being limited to the exemplary embodiments set forth herein. Descriptions of well-known parts are omitted for clarity, and like reference numerals refer to like elements throughout.

Table 1 lists the elemental content (including sodium, magnesium, aluminum, silicon, potassium, and calcium, based on the total weight of these elements) of the blast furnace slag, reducing slag, silicon oxide sand, three-eighths oxidizing slag stone, and six-eighths oxidizing slag stone used in the Examples and Comparative Examples of the disclosure and the elemental content of the natural sand and natural stone used in the Comparative Examples of the disclosure. An elemental analysis was performed using an X-ray fluorescence spectrometer (XRF). Additionally, Table 1 lists the particle size distribution D90 of the blast furnace slag, reducing slag, silicon oxide sand, three-eighths oxidizing slag stone, and six-eighths oxidizing slag stone used in the Examples and Comparative Examples of the disclosure and the particle size distribution D90 of the natural sand and natural stone used in the Comparative Examples. The particle size distribution D90 was determined according to ISO 13322-1: 2004.

**Table 1**

| | sodium (wt%) | magnesiu m (wt%) | aluminum (wt%) | silicon (wt%) | potassium (wt%) | calcium (wt%) | D90 |
|---|---|---|---|---|---|---|---|
| blast furnace slag | 0.37 | 6.52 | 14.32 | 25.52 | 0.51 | 52.75 | 57.52 µm |
| reducing slag | 0.41 | 4.53 | 2.18 | 18.38 | 0.16 | 74.35 | 72.89 µm |
| silicon oxide sand | 0.99 | 12.37 | 3.43 | 18.05 | 0.41 | 64.75 | 720.47 µm |
| three-eighths oxidizing slag stone | 0.00 | 7.91 | 4.69 | 20.25 | 0.24 | 66.91 | 0.9 cm |
| six-eighths oxidizing slag stone | 0.00 | 5.36 | 5.57 | 20.37 | 0.29 | 68.40 | 2cm |
| natural sand | 0.00 | 7.07 | 6.94 | 16.77 | 0.17 | 69.05 | 202.31 µm |
| natural sand | 2.45 | 1.97 | 17.07 | 71.41 | 2.45 | 4.65 | 0.8 cm |

### Example 1

67.14 parts by weight of blast furnace slag, 32.89 parts by weight of reducing slag, and 40 parts by weight of dust-collection filtrate (an aqueous solution containing sodium sulfate, with a sodium sulfate concentration of about 17.63wt%) were added to a mixing tank. After thorough mixing, Concrete mixture (1) was obtained. Next, Concrete mixture (1) was poured into a cylindrical mold (10cm in diameter and 20cm in length) and dried at room temperature. The initial and final setting times of the concrete mixture were observed to be 73 minutes and 93 minutes, respectively. After 1 day of curing and demolding, Concrete column (1) was obtained.

### Example 2

Example 2 was performed in the same manner as the method used for preparing Concrete mixture (1) as disclosed in Example 1, except that the amount of dust-collection filtrate was increased from 40 parts by weight to 45 parts by weight, obtaining Concrete mixture (2). Next, Concrete mixture (2) was poured into a cylindrical mold (10cm in diameter and 20cm in length) and dried at room temperature. After 1 day of curing and demolding, Concrete column (2) was obtained.

### Example 3

Example 3 was performed in the same manner as the method used for preparing Concrete mixture (1) as disclosed in Example 1, except that the amount of dust-collection filtrate was increased from 40 parts by weight to 50 parts by weight, obtaining Concrete mixture (3). Next, Concrete mixture (3) was poured into a cylindrical mold (10cm in diameter and 20cm in length) and dried at room temperature. After 1 day of curing and demolding, Concrete column (3) was obtained.

### Comparative Example 1

Comparative Example 1 was performed in the same manner as the method used for preparing Concrete mixture (1) as disclosed in Example 1, except that the dust-collection filtrate was replaced with water, obtaining Concrete mixture (4). Next, Concrete mixture (4) was poured into a cylindrical mold (10cm in diameter and 20cm in length) and dried at room temperature. The initial and final setting times of the concrete mixture were observed to be 660 minutes and 1140 minutes, respectively. After 1 day of curing and demolding, Concrete column (4) was obtained.

### Comparative Example 2

Comparative Example 2 was performed in the same manner as the method used for preparing Concrete mixture (1) as disclosed in Example 1, except that the dust-collection filtrate was replaced with water. In addition, 1 parts by weight of sodium hydroxide (NaOH) was added into water, obtaining Concrete mixture (5). Next, Concrete mixture (5) was poured into a cylindrical mold (10cm in diameter and 20cm in length) and dried at room temperature. After 1 day of curing and demolding, Concrete column (5) was obtained.

### Comparative Example 3

Comparative Example 3 was performed in the same manner as the method used for preparing Concrete mixture (1) as disclosed in Example 1, except that the dust-collection filtrate was replaced with water. In addition, 0.67 parts by weight of sodium metasilicate and 1 parts by weight of sodium hydroxide were added into water, obtaining Concrete mixture (6). Next, Concrete mixture (6) was poured into a cylindrical mold (10cm in diameter and 20cm in length) and dried at room temperature. After 1 day of curing and demolding, Concrete column (6) was obtained.

### Comparative Example 4

Comparative Example 4 was performed in the same manner as the method used for preparing Concrete mixture (1) as disclosed in Example 1, except that the dust-collection filtrate was replaced with water. In addition, 1.37 parts by weight of sodium metasilicate and 1 parts by weight of sodium hydroxide were added into water, obtaining Concrete mixture (7). Next, Concrete mixture (7) was poured into a cylindrical mold (10cm in diameter and 20cm in length) and dried at room temperature. After 1 day of curing and demolding, Concrete column (7) was obtained.

### Comparative Example 5

Comparative Example 5 was performed in the same manner as the method used for preparing Concrete mixture (1) as disclosed in Example 1, except that the dust-collection filtrate was replaced with water. In addition, 2.73 parts by weight of sodium metasilicate and 1 parts by weight of sodium hydroxide were added into water, obtaining Concrete mixture (8). Next, Concrete mixture (8) was poured into a cylindrical mold (10cm in diameter and 20cm in length) and dried at room temperature. After 1 day of curing and demolding, Concrete column (8) was obtained.

The components and amounts used to form concrete mixtures in Examples 1-3 and Comparative Examples 1-5, as well as their alkali equivalent concentration, are shown in Table 2.

**Table 2**

| | blast furnace slag (parts by weight ) | reducing slag (parts by weight ) | sodium metasilicate (parts by weight ) | sodium hydroxide (parts by weight ) | water (parts by weight ) | dust-collection filtrate(parts by weight) | alkali equivalent concentration (eq/L) |
|---|---|---|---|---|---|---|---|
| Example 1 | 67.14 | 32.86 | 0 | 0 | 0 | 40 | 2.48 |
| Example 2 | 67.14 | 32.86 | 0 | 0 | 0 | 45 | 2.58 |
| Example 3 | 67.14 | 32.86 | 0 | 0 | 0 | 50 | 2.59 |
| Comparative Example 1 | 67.14 | 32.86 | 0 | 0 | 40.00 | 0 | 0 |
| Comparative Example 2 | 67.14 | 32.86 | 0 | 0.99 | 40.00 | 0 | 2.26 |
| Comparative Example 3 | 67.14 | 32.86 | 0.67 | 0.99 | 40.00 | 0 | 3.26 |
| Comparative Example 4 | 67.14 | 32.86 | 1.37 | 0.99 | 40.00 | 0 | 4.27 |
| Comparative Example 5 | 67.14 | 32.86 | 2.73 | 0.99 | 40.00 | 0 | 6.28 |

An elemental analysis of Concrete columns (1)-(3) was performed using an X-ray fluorescence spectrometer (XRF) to determine the content of sodium, magnesium, aluminum, silicon, potassium, and calcium in Concrete columns (1)-(3). The results are shown in Table 3.

**Table 3**

| | sodium (wt%) | magnesium (wt%) | aluminum (wt%) | silicon (wt%) | potassium (wt%) | calcium (wt%) |
|---|---|---|---|---|---|---|
| Example 1 | 16.76 | 4.00 | 9.87 | 18.45 | 0.64 | 50.28 |
| Example 2 | 19.82 | 3.83 | 7.63 | 15.77 | 0.62 | 52.33 |
| Example 3 | 19.89 | 3.67 | 7.52 | 18.56 | 0.66 | 49.70 |

Next, an analysis of Concrete column (1) was performed using an X-ray diffractometer (XRD). The X-ray diffraction spectrum revealed that Concrete column (1) exhibited a characteristic peak of calcium aluminosilicate compound (Ca₃Al₂(SiO₄)₃) at 2θ (diffraction angle) of 43.4° to 44.5° and a characteristic peak of calcium silicate (Ca₂(SiO₄)₃) at 2θ (diffraction angle) of 31.9° to 32.2°. Next, the integrated intensity (S1) of the characteristic peak at 2θ of 43.4° to 44.5° and the integrated intensity (S2) of the characteristic peak at 2θ of 31.9° to 32.2° for Concrete column (1) were calculated. The ratio of the integrated intensity (S1/S2) was then determined, and the results are shown in Table 4. In addition, an analysis of Concrete column (4) was performed using an X-ray diffractometer (XRD). The X-ray diffraction spectrum revealed that Concrete column (4) did not exhibit a characteristic peak at 2θ of 43.4° to 44.5° but showed a characteristic peak of calcium silicate (Ca₂(SiO₄)₃) at 2θ of 31.9° to 32.2°. Next, the integrated intensity (S2) of the characteristic peak at 2θ of 31.9° to 32.2° for Concrete column (4) was calculated, and the results are shown in Table 4.

**Table 4**

| | | integrated intensity (S1) | integrated intensity (S2) | S1/S2 |
|---|---|---|---|---|
| Example 1 | Concrete column (1) | 4.8 | 48 | 0.1 |
| Comparative Example 1 | Concrete column (4) | 0 (no characteristic peak) | 47.3 | 0 |

Next, the compressive strength of Concrete columns (1)-(8) was measured after 7 and 28 days of curing, and the results are shown in Table 5. The compressive strength was determined by the method according to ASTM C109 (with a sample size of 50 mm x 50 mm x 50 mm).

**Table 5**

| | | compressive strength (kgf/cm²) | | density (g/cm³) |
|---|---|---|---|---|
| | | 7 days | 28 days | |
| Example 1 | Concrete column (1) | 573 | 674 | 2.4 |
| Example 2 | Concrete column (2) | 437 | 547 | 2.4 |
| Example 3 | Concrete column (3) | 417 | 455 | 2.4 |
| Comparative Example 1 | Concrete column (4) | 7 | 11 | 2.2 |
| Comparative Example 2 | Concrete column (5) | 192 | 258 | 2.3 |

| Comparative Example 3 | Concrete column (6) | 287 | 344 | 2.3 |
|---|---|---|---|---|
| Comparative Example 4 | Concrete column (7) | 311 | 370 | 2.3 |
| Comparative Example 5 | Concrete column (8) | 346 | 421 | 2.4 |

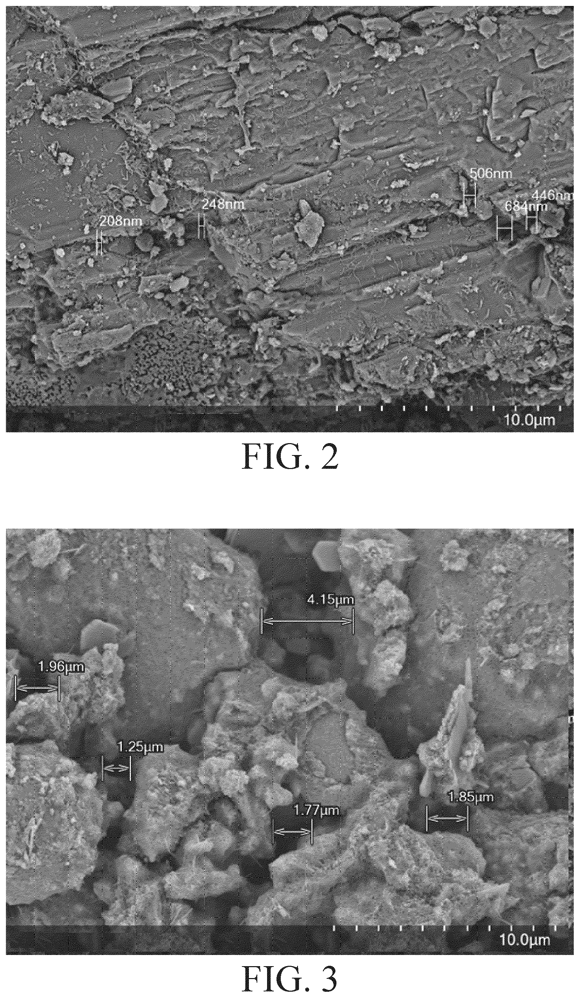

As shown in Tables 2 to 5, since Concrete column (1) of Example 1 was prepared from the blast furnace slag and reducing slag (containing silicon, aluminum, and calcium) (serving as the source of inorganic polymer) used in concert with industrial waste alkali filtrate (i.e., dust-collection filtrate) (providing alkali activation), when the metal oxides (such as silicon oxide (SiO₂), aluminum oxide (Al₂O₃), calcium oxide (CaO), and magnesium oxide (MgO)) in blast furnace slag and reducing slag were subjected to a recombination via alkali activation to undergo a polymerization, the resulting inorganic polymer contained a high-strength gelatinous calcium aluminosilicate (CASO) compound. The X-ray diffraction spectrum confirmed that Concrete column (1) exhibited the characteristic peak of calcium aluminosilicate compound (Ca₃Al₂(SiO₄)₃), and the ratio of the integrated intensity of the calcium aluminosilicate compound characteristic peak (S1) to the calcium silicate characteristic peak (S2) (S1/S2) was about 0.1. After dehydration and polycondensation, solidification occurred within a short curing time, forming an ionic bond structure at room temperature. Concrete column (1) was observed with a scanning electron microscope (SEM), and the result is shown in FIG. 2. The inorganic polymer of Concrete column (1) had a dense layered microstructure (with a density of about 2.4 g/cm³ and an average pore size of about 0.42 µm), as shown in FIG. 2, resulting in that Concrete column (1) exhibited excellent compressive strength (as shown in Table 5) and could physically encapsulate heavy metals within the concrete column.

In contrast, Concrete column (4) of Comparative Example 1, which used water instead of dust-collection filtrate, underwent curing under an alkali equivalent concentration of 0%. Consequently, it failed to form a high-strength gelatinous calcium aluminosilicate compound (calcium aluminosilicate, CASO). The X-ray diffraction spectrum confirmed that Concrete column (4) did not exhibit the characteristic peak of calcium aluminosilicate compound (Ca₃Al₂(SiO₄)₃), indicating that a highly dense gelatinous inorganic polymer was not obtained. Concrete column (4) was observed with a scanning electron microscope (SEM), and the result is shown in FIG. 3. Since the blast furnace slag could not react with the reducing slag to form an inorganic polymer containing gelatinous calcium aluminosilicate compound, Concrete column (4) exhibited a porous microstructure (with a density of about 2.2 g/cm³ and an average pore size of about 2.196 µm), as shown in FIG. 3. Concrete column (4) exhibited poor compressive strength (as shown in Table 5). Due to the loose structure, heavy metal elements within the concrete column is apt to diffuse out. In addition, Concrete mixture (4) in Comparative Example 1 required an extremely long curing time.

In addition, Fourier-transform infrared spectroscopy (FTIR) was used to evaluate Concrete column (1) and Concrete column (4). The results indicate that, in comparison with Concrete column (4) of Comparative Example 1, Concrete column (1) exhibits a significant peak at 748 cm⁻¹, which corresponds to the characteristic peak of short-bonded Si-O/Al-O, demonstrating the presence of silicon-oxygen (Si-O) or aluminum-oxygen (Al-O) bonds in Concrete column (1). In addition, Concrete column (1) shows distinct absorption peaks at 1018 cm⁻¹ and 1108 cm⁻¹, confirming that the reaction between blast furnace slag and reducing slag led to changes or rearrangements in the gel structure, forming an Si-O-T (T being SiO₄ or AlO₄) structure. The FTIR spectra of Example 1 and Comparative Example 1 indicate that when the dust-collection filtrate is used as an alkali activator in the preparation of the concrete mixture, the stretching vibration of the primary Si-O-T peak increases, making the bonding peaks (Si-O or Al-O) more pronounced. Combined with the results in Table 5, at higher alkalinity levels (i.e., replacing water with dust-collection filtrate), the stretching vibration of the Si-O-T peak increases (i.e., a significant increase in the characteristic peaks at 1018 cm⁻¹ and 1108 cm⁻¹), which correlates with an enhancement in the compressive strength of the resulting concrete column.

In Comparison with Comparative Example 2, Examples 1 to 3 replaced expensive chemical alkalis with dust-collection filtrate, effectively addressing the issue of waste disposal. Simultaneously, industrial waste alkali exhibited a lower exothermic rate than chemical alkalis, avoiding excessively short curing times that could reduce the formation of gelatinous calcium aluminosilicate compounds in the inorganic polymer. Therefore, the concrete columns in Examples 1 to 3 exhibited higher compressive strength. In addition, even when increasing the alkali equivalent used in Comparative Example 2 (i.e., Comparative Examples 3 to 5), the compressive strength of the resulting concrete columns remained lower than that of the Concrete columns of the disclosure (as shown in Tables 2 and 5). As shown in Tables 2 and 5, the compressive strength of Concrete columns (1) to (3) in Examples 1 to 3 is influenced by the liquid-to-binder ratio in the concrete mixture (i.e., the ratio of the weight of dust-collection filtrate to the total weight of blast furnace slag and reducing slag).

### Example 4

64.49 parts by weight of blast furnace slag, 30.51 parts by weight of reducing slag, 107.54 parts by weight of oxidizing slag sand, 108.72 parts by weight of three-eighths oxidizing slag stone, 131.79 parts by weight of six-eighths oxidizing slag stone, and 40 parts by weight of dust-collection filtrate (an aqueous solution containing sodium sulfate, with a sodium sulfate concentration of about 17.63wt%) were added to a mixing tank. After thorough mixing, Concrete mixture (9) was obtained. Next, Concrete mixture (9) was poured into a cylindrical mold (10cm in diameter and 20cm in length) and dried at room temperature. After 1 day of curing and demolding, Concrete column (9) was obtained.

### Example 5

52.20 parts by weight of blast furnace slag, 47.80 parts by weight of reducing slag, 80.78 parts by weight of oxidizing slag sand, 81.67 parts by weight of three-eighths oxidizing slag stone, 99 parts by weight of six-eighths oxidizing slag stone, and 40 parts by weight of dust-collection filtrate (an aqueous solution containing sodium sulfate, with a sodium sulfate concentration of about 17.63wt%) were added to a mixing tank. After thorough mixing, Concrete mixture (10) was obtained. Next, Concrete mixture (10) was poured into a cylindrical mold (10cm in diameter and 20cm in length) and dried at room temperature. After 1 day of curing and demolding, Concrete column (10) was obtained.

### Example 6

38.14 parts by weight of blast furnace slag, 61.86 parts by weight of reducing slag, 59.02 parts by weight of oxidizing slag sand, 59.67 parts by weight of three-eighths oxidizing slag stone, 72.33 parts by weight of six-eighths oxidizing slag stone, and 40 parts by weight of dust-collection filtrate (an aqueous solution containing sodium sulfate, with a sodium sulfate concentration of about 17.63wt%) were added to a mixing tank. After thorough mixing, Concrete mixture (11) was obtained. Next, Concrete mixture (11) was poured into a cylindrical mold (10cm in diameter and 20cm in length) and dried at room temperature. After 1 day of curing and demolding, Concrete column (11) was obtained.

### Comparative Example 6

64.49 parts by weight of blast furnace slag, 30.51 parts by weight of reducing slag, 107.54 parts by weight of natural sand, 240.51 parts by weight of natural three-eighths stone, and 40 parts by weight of dust-collection filtrate (an aqueous solution containing sodium sulfate, with a sodium sulfate concentration of about 17.63wt%) were added to a mixing tank. After thorough mixing, Concrete mixture (12) was obtained. Next, Concrete mixture (12) was poured into a cylindrical mold (10cm in diameter and 20cm in length) and dried at room temperature. After 1 day of curing and demolding, Concrete column (12) was obtained.

### Comparative Example 7

64.49 parts by weight of blast furnace slag, 30.51 parts by weight of reducing slag, 107.54 parts by weight of oxidizing slag sand, 108.72 parts by weight of three-eighths oxidizing slag stone, 131.79 parts by weight of six-eighths oxidizing slag stone, 9.61 parts by weight of sodium metasilicate, 3.50 parts by weight of sodium hydroxide, and 40 parts by weight of water were added to a mixing tank. After thorough mixing, Concrete mixture (13) was obtained. Next, Concrete mixture (13) was poured into a cylindrical mold (10cm in diameter and 20cm in length) and dried at room temperature. After 1 day of curing and demolding, Concrete column (13) was obtained.

The components and amounts used to form concrete mixtures in Examples 4-6 and Comparative Examples 6 and 7, as well as their alkali equivalent concentration, are shown in Table 6.

**Table 6**

| | Example 4 | Example 5 | Example 6 | Comparative Example 6 | Comparative Example 7 |
|---|---|---|---|---|---|
| blast furnace slag (parts by weight ) | 69.49 | 52.20 | 38.14 | 69.49 | 69.49 |
| reducing slag (parts by weight ) | 30.51 | 47.80 | 61.86 | 30.51 | 30.51 |
| natural sand (parts by weight ) | 0 | 0 | 0 | 107.54 | 0 |
| natural three-eighths stone (parts by weight ) | 0 | 0 | 0 | 240.51 | 0 |
| oxidizing slag sand (parts by weight ) | 107.54 | 80.78 | 59.02 | 0 | 107.54 |
| three-eighths oxidizing slag stone (parts by weight ) | 108.72 | 81.67 | 59.67 | 0 | 108.72 |
| six-eighths oxidizing slag stone (parts by weight ) | 131.79 | 99.00 | 72.33 | 0 | 131.79 |
| sodium metasilicate (parts by weight ) | 0 | 0 | 0 | 0 | 9.61 |
| sodium hydroxide (parts by weight ) | 0 | 0 | 0 | 0 | 3.50 |
| water (parts by weight ) | 0 | 0 | 0 | 0 | 40.00 |
| dust-collection filtrate(parts by weight ) | 40.00 | 40.00 | 40.00 | 40.00 | 0 |
| alkali equivalent concentration (%) | 2.59 | 2.59 | 2.59 | 2.59 | 4.44 |

An elemental analysis of Concrete columns (9)-(11) was performed using an X-ray fluorescence spectrometer (XRF) to determine the content of sodium, magnesium, aluminum, silicon, potassium, and calcium in Concrete columns (9)-(11). The results are shown in Table 7.

**Table 7**

| | sodium (wt%) | magnesium (wt%) | aluminum (wt%) | silicon (wt%) | potassium (wt%) | calcium (wt%) |
|---|---|---|---|---|---|---|
| Example 4 | 15.06 | 4.80 | 8.86 | 19.93 | 0.39 | 50.95 |
| Example 5 | 13.40 | 5.04 | 10.24 | 21.07 | 0.44 | 49.80 |
| Example 6 | 11.60 | 5.48 | 10.52 | 21.38 | 0.42 | 50.60 |

Next, an analysis of Concrete column (11) of Example 6 was performed using an X-ray diffractometer (XRD). The X-ray diffraction spectrum revealed that Concrete column (11) exhibited a characteristic peak of calcium aluminosilicate compound (Ca₃Al₂(SiO₄)₃) at 2θ (diffraction angle) of 43.4° to 44.5° and a characteristic peak of calcium silicate (Ca₂(SiO₄)₃) at 2θ (diffraction angle) of 31.9° to 32.2°. Next, the integrated intensity (S1) of the characteristic peak at 2θ of 43.4° to 44.5° and the integrated intensity (S2) of the characteristic peak at 2θ of 31.9° to 32.2° for Concrete column (11) were calculated. The ratio of the integrated intensity (S1/S2) was then determined, and the results are shown in Table 8. In addition, an analysis of Concrete column (13) of Comparative Example 7 was performed using an X-ray diffractometer (XRD). The X-ray diffraction spectrum revealed that Concrete column (13) did not exhibit a characteristic peak at 2θ of 43.4° to 44.5° but showed a characteristic peak of calcium silicate (Ca₂(SiO₄)₃) at 2θ of 31.9° to 32.2°. Next, the integrated intensity (S2) of the characteristic peak at 2θ of 31.9° to 32.2° for Concrete column (13) was calculated, and the results are shown in Table 8.

**Table 8**

| | | integrated intensity (S1) | integrated intensity (S2) | S1/S2 |
|---|---|---|---|---|
| Example 6 | Concrete column (1) | 2.1 | 47.6 | 0.044 |
| Comparative Example 7 | Concrete column (2) | 0(no characteristic peak) | 49.3 | 0 |

Next, the compressive strength of Concrete columns (9)-(13) was measured after 7 and 28 days of curing, and the results are shown in Table 9. The compressive strength was determined by the method according to ASTM C109.

**Table 9**

| | | compressive strength (kgf/cm²) | | density (g/cm³) |
|---|---|---|---|---|
| | | 7 days | 28 days | |
| Example 4 | Concrete column (9) | 396 | 506 | 2.4 |
| Example 5 | Concrete column (10) | 382 | 446 | 2.4 |
| Comparative Example 6 | Concrete column (12) | 332 | 401 | 2.4 |

As shown in Tables 6 to 9, since Concrete column (9) of Example 4 was prepared from the blast furnace slag and reducing slag (containing silicon, aluminum, and calcium) (serving as the source of inorganic polymer) used in concert with industrial waste alkali filtrate (i.e., dust-collection filtrate) (providing alkali activation), when the metal oxides (such as silicon oxide (SiO₂), aluminum oxide (Al₂O₃), calcium oxide (CaO), and magnesium oxide (MgO)) in blast furnace slag and reducing slag were subjected to a recombination via alkali activation to undergo a polymerization, the resulting inorganic polymer contained a high-strength gelatinous calcium aluminosilicate (CASO) compound. The X-ray diffraction spectrum confirmed that Concrete column (4) exhibited the characteristic peak of calcium aluminosilicate compound (Ca₃Al₂(SiO₄)₃), and the ratio of the integrated intensity of the calcium aluminosilicate compound characteristic peak (S1) to the calcium silicate characteristic peak (S2) (S1/S2) was about0.44. In addition, in Example 4, waste aggregates (such as oxidizing slag sand, three-eighths oxidizing slag stone, and six-eighths oxidizing slag stone) were used instead of natural sand and stone to produce concrete columns. This not only effectively addresses the issue of waste disposal but also ensures that the concrete columns maintain high compressive strength.

Furthermore, after 28 days of curing, Concrete column (9) of Example 4 was subjected to a heavy metal leaching test, and the results are shown in Table 10. The heavy metal leaching test was performed by the method s according to EPA Method 1311. The ion content in the dust-collection filtrate was determined using an inductively coupled plasma optical Emission spectroscopy (ICP-OES) analyzer (Agilent 5100).

**Table 10**

| | dust-collection filtrate used in Example 4 | Concrete column (9) |
|---|---|---|
| sodium (ppm) | 116,500 | 119 |
| lead (ppm) | 1.3 | <0.02 |
| cadmium (ppm) | <0.02 | <0.02 |
| chromium (ppm) | 11.8 | <0.02 |
| selenium (ppm) | 12,650 | 0.75 |
| copper (ppm) | 0.23 | <0.02 |
| barium (ppm) | 0.83 | <0.02 |
| arsenic (ppm) | 1.7 | <0.02 |
| mercury (ppm) | <0.02 | <0.02 |

As shown in Table 10, Concrete column (9) effectively encapsulated heavy metal ions, significantly reducing their leaching concentration and meeting regulatory requirements.

In addition, as shown in Table 9, in comparison with Comparative Example 6 (which used natural sand/stone), Concrete columns (9) and (10) of Examples 4 and 5 exhibited higher compressive strength and density than natural sand/stone inorganic polymer concrete. The reason is that, in comparison with natural sand/stone, oxidizing slag aggregates have a rougher surface. Therefore, the contact area between the oxidizing slag aggregates and the inorganic polymer formed by the reaction of blast furnace slag and reducing slag increases, enhancing the bonding ability of the oxidizing slag aggregates and improving the compressive strength of the concrete columns.

Accordingly, the disclosure demonstrates the resourceful reutilization of industrial by-products (or waste) to produce environmentally friendly concrete that may solidify at room temperature with high compressive strength and low toxicity. In addition, by means of the use of waste alkaline solution as an alkali activator (replacing expensive chemical alkalis) and mixing it with cementitious materials in a specific ratio, when the metal oxides (such as silicon oxide (SiO₂), aluminum oxide (Al₂O₃), calcium oxide (CaO), magnesium oxide (MgO)) in the cementitious material are subjected to a recombination via alkali activation to undergo a polymerization, the resulting inorganic polymer contains a highly dense gelatinous calcium aluminosilicate compound, which helps immobilize and encapsulate heavy metals, avoiding their release. As a result, the concrete mixture of the disclosure exhibits an appropriate solidification rate at room temperature, and the resulting concrete has low toxicity, resistance to expansion, and high compressive strength.

It will be clear that various modifications and variations can be made to the disclosed methods and materials. It is intended that the specification and examples be considered as exemplary only, with the true scope of the disclosure being indicated by the following claims and their equivalents.

## Claims

1. A concrete, comprising:
11wt% to 20wt% of sodium (Na), 3wt% to 6wt% of magnesium (Mg), 7wt% to 11wt% of aluminum (Al), 15wt% to 22wt% of silicon (Si), 0.4wt% to 0.7wt% of potassium (K), and 49wt% to 53wt% of calcium (Ca), based on a total weight of sodium, magnesium, aluminum, silicon, potassium, and calcium, wherein the concrete comprises a calcium aluminosilicate compound.

2. The concrete as claimed in Claim 1, wherein the calcium aluminosilicate compound has a characteristic peak at 2θ from 43.4° to 44.5° in an X-ray diffraction spectrum of the concrete.

3. The concrete as claimed in Claim 1 or 2, wherein the X-ray diffraction spectrum of the concrete has a characteristic peak at 2θ from 43.4° to 44.5° with a first integral intensity (S1) and the X-ray diffraction spectrum of the concrete has a characteristic peak at 2θ from 31.9° to 32.2° with a second integral intensity (S2), wherein a ratio of the first integral intensity to the second integral intensity (S1/S2) is 0.03 to 0.15.

4. The concrete as claimed in Claim 1, 2 or 3, which is **characterized by** a Fourier transform infrared spectrum comprising a characteristic peak in a range of 1,000 cm⁻¹ to 1,500 cm⁻¹.

5. A method for preparing concrete as claimed in any one of Claims 1 to 4, comprising:
providing a concrete mixture, wherein the concrete mixture comprises a cementitious material and a waste alkaline solution, wherein the cementitious material comprises 35 to 70 parts by weight of blast furnace slag, and 30 to 65 parts by weight of reducing slag, wherein the waste alkaline solution comprises a sodium ion with a concentration of 100,000 ppm to 150,000 ppm; and, a weight ratio of the waste alkaline solution to the cementitious material is 3: 10 to 5: 10;
subjecting the concrete mixture to a molding process, obtaining a green body; and
subjecting the green body to a curing process at room temperature, obtaining the concrete.

6. The method for preparing concrete as claimed in Claim 5, wherein the waste alkaline solution further comprises a cation other than sodium ion, and the concentration of the cation is 5,000 ppm to 30,000 ppm.

7. The method for preparing concrete as claimed in Claim 5 or 6, wherein the waste alkaline solution is a semiconductor polishing waste alkaline solution, aluminum dross recycling alkaline solution, ceramic process cleaning waste alkaline solution, or a combination thereof.

8. The method for preparing concrete as claimed in Claim 5, 6 or 7, wherein the blast furnace slag comprises 0.1wt% to 0.5wt% of sodium (Na), 5wt% to 8wt% of magnesium (Mg), 13wt% to 16wt% of aluminum (Al), 24wt% to 27wt% of silicon (Si), 0.2wt% to 0.7wt% of potassium (K), and 50wt% to 55wt% of calcium (Ca), based on a total weight of sodium, magnesium, aluminum, silicon, potassium and calcium in the blast furnace slag.

9. The method for preparing concrete as claimed in any one of Claims 5 to 8, wherein the blast furnace slag has a particle size distribution D90 of 40 µm from 90 µm.

10. The method for preparing concrete as claimed in any one of Claims 5 to 9, wherein the reducing slag comprises 0.2wt% to 0.6wt% of sodium (Na), 3wt% to 6wt% of magnesium (Mg), 1wt% to 3wt% of aluminum (Al), 16wt% to 20wt% of silicon (Si), 0.05wt% to 0.3wt% of potassium (K), and 70wt% to 80wt% of calcium (Ca), based on a total weight of sodium, magnesium, aluminum, silicon, potassium and calcium in the reducing slag.

11. The method for preparing concrete as claimed in any one of Claims 5 to 10, wherein the reducing slag has a particle size distribution D90 of 50 µm to 100 µm.

12. The method for preparing concrete as claimed in any one of Claims 5 to 11, wherein the concrete mixture further comprises an oxidizing slag.

13. The method for preparing concrete as claimed in Claim 12,
wherein a weight ratio of the oxidizing slag to the cementitious material is 1: 100 to 400: 100, and/or
wherein the oxidizing slag comprises 5wt% to 13wt% of magnesium (Mg), 3wt% to 6wt% of aluminum (Al), 18wt% to 21wt% of silicon (Si), 0.2wt% to 0.5wt% of potassium (K), and 64wt% to 70wt% of calcium (Ca), based on a total weight of magnesium, aluminum, silicon, potassium and calcium in the oxidizing slag.

14. The method for preparing concrete as claimed in Claim 12 or 13, wherein the oxidizing slag has a particle size distribution D90 of 500 µm to 3 cm.

15. The method for preparing concrete as claimed in any one of Claims 5 to 14, wherein the concrete mixture does not comprise a natural sand or a natural stone.
